# EUROPEAN PATENT SPECIFICATION

(11) **EP 0 743 884 B1**
(45) Date of publication and mention of the grant of the patent: **19.02.2003**
(21) Application number: 95907209.1
(22) Date of filing: 07.12.1994
(51) Int. Cl.: F28G 3/16, F22B 37/48, F22B 37/00

(54) **DEPLOYMENT SYSTEM FOR AN UPPER BUNDLE STEAM GENERATOR CLEANING/INSPECTION DEVICE**
EINSATZSYSTEM EINER REINIGUNGS-/INSPEKTIONSEINRICHTUNG FÜR DIE OBEREN ROHRBÜNDEL EINES DAMPFERZEUGERS
SYSTEME DE MISE EN OEUVRE POUR DISPOSITIF DE NETTOYAGE/CONTROLE DU FAISCEAU TUBULAIRE SUPERIEUR D'UN GENERATEUR DE VAPEUR

(43) Date of publication of application: 27.11.1996
(73) Proprietor: FOSTER-MILLER, INC., Waltham Massachusetts 02154-1196 (US)
(72) Inventor: ASHTON, Augustus, J., III, Westboro, MA 01581 (US); RUGGIERI, Steven, K., Marlborough, MA 01752 (US); LOVETT, Timothy, J., Wellesley, MA 02181 (US); BRIGHTMAN, Alan, Bridgewater, MA 02324 (US); JENS, Steve, Belmont, MA 02178 (US)
(74) Representative: Jones, Graham H.
(86) International application number: US9414371
(87) International publication number: WO96017695

(56) References cited:
- DE-A- 4 226 854
- US-A- 338 310
- US-A- 1 905 824
- US-A- 3 120 237
- US-A- 3 330 105
- US-A- 3 599 871
- US-A- 3 655 122
- US-A- 4 107 001
- US-A- 4 219 976
- US-A- 4 384 594
- US-A- 4 392 344
- US-A- 4 424 769
- US-A- 4 638 667
- US-A- 4 691 723
- US-A- 4 702 281
- US-A- 4 834 069
- US-A- 4 844 021
- US-A- 4 980 120
- US-A- 5 036 871
- US-A- 5 065 703
- US-A- 5 172 653
- US-A- 5 178 129
- US-A- 5 194 217
- US-A- 5 265 129

## Description

### FIELD OF INVENTION

This invention relates to a deployment system for an upper bundle cleaning/inspection device for a nuclear power plant steam generator.

### BACKGROUND OF INVENTION

Steam generators convert heat from the primary side of a nuclear power plant to steam on the secondary side so that the primary and secondary systems are kept separate. A typical generator is a vertical cylinder consisting of a large number of U-shaped tubes which extend upward from the floor or "tube sheet" of the generator. Fluid at high temperature and pressure from the reactor travels through the tubes giving up energy to a feed water blanket surrounding the tubes in the generator creating steam and ultimately power when the stream is introduced to turbines.

Steam generators were designed to last upwards of forty years but in practice such reliability figures have proven not to be the case. The problem is that sludge from particulate impurities suspended in the feed water forms on the tubes which greatly affects the efficiency of the generator and can even cause the tubes to degrade to the point of causing fissures in the tubes. If radioactive primary fluid within the tubes seeps into the secondary side, the result can be disastrous. Plugging or otherwise servicing such fissures is time consuming and results in expensive down time during which power must be purchased from other sources at great expense.

There are known methods for cleaning the tubes proximate the bottom of the steam generator using flexible lances and the like using water under pressure, but since a typical steam generator can be thirty feet tall, it is very difficult to reach the sludge at the upper levels of the tubes using water jets directed upwards from the bottom of the generator.

So, chemical cleaning is used but there are several disadvantages. First, chemical cleaning is very expensive and requires an extended outage. Also, the solvents used in chemical cleaning can corrode the internal components of the steam generator. In addition. chemical cleaning can generate large quantities of hazardous, possibly radioactive waste. Disposal of this waste is very expensive. For these reasons, although many utilities have considered chemical cleaning, few plants have actually implemented it.

On the other hand, there are severe technical challenges faced when considering alternate cleaning methods. A typical steam generator has approximately 4645 square meters (50,000 square feet) of heat transfer area. The tube bundle is about 3 meters (10 feet) in diameter and 9.1 meters (30 feet) tall but the access alley in the middle of the tube bundle is only 8.9 centimeters (3.5 inches) wide and is interrupted by a series of successive support plates approximately every 1.2 meters (4 feet). There are flow slots through the support plates but they are very small in size, typically 7 by 38 centimeters (2.75 by 15 inches). In addition, the access into the steam generator is limited to a six inch hand hole. Finally, the gap between the vertically extending tubes is only 1 centimeter (0.406 inches) or less.

Therefore, manipulating cleaning spray heads and/or inspection equipment up 9.1 meters (30 feet) to the top of the steam generator to clean or inspect the upper tube bundles is not trivial. There are three primary design considerations. First, the deployment system must be small enough so it can fit through the hand hole of the steam generator and through the flow slots in successive support plates. Second, the deployment system must extend up through the flow slots to a length of as much as 9.1 meters (30 feet) while still providing support for the cleaning head or inspection device deployed at the distal end. Third, the deployment system must be fully retractable. A system which has the potential for failure, which could become lodged in the upper regions of the tube bundles, or which could fail and leave components inside the steam generator is too risky to employ inside the very expensive steam generators.

In addition, the deployment system must facilitate fast cleaning and/or inspection to minimize downtime with a minimum of manual labor due to the expensive outage costs associated with nuclear power plants and the potential hazard of radioactive exposure to workers in the area during cleaning.

In US-A-5,265,129 a dual boom design is discussed wherein a telescoping portion consisting of a plurality of pneumatic or hydraulic cylinders is used to deploy an inspection camera up through the support plates. One problem with this design is that the telescoping portion in its collapsed state must be received through the hand hole of the generator and then uprighted - but it cannot exceed the height of the first tube support plate which may be as small as 18 inches.

Such a device which in its collapsed state can be uprighted in an .45 meters (18 inch) height and which is still capable of extending up to 9.1 meters (30 feet) is difficult to design, manufacture, and control.

In DE-A-4226854 there is disclosed a deployment system for a steam generator inspection device. The deployment system is in the form of a manipulator for the inspection of poorly accessible locations in the steam generator. The manipulator uses flexible chain links that rely on gravity to maintain a chain rigid in a horizontal position, and thereafter to extend downward. As shown in Figure 2 of DE-A-4226854, the links of the manipulator use gravity to maintain the chain rigid in a horizontal rectilinear position. The links use a continuation which projects onto the adjacent chain link and forms a stop or a bracing means of the adjacent link. Gravity then causes the continuation to press on the bracing means thereby providing a rigid horizontal manipulator.

The manipulator is incapable of remaining rigid as it is projected vertically upward and thus cannot support a cleaning head or inspection device as they are deployed upward 30 feet. Any attempt to extend the chain of DE-A-4226854 vertically upward from the lower hand hole of a steam generator would result in the chain falling or flopping to the side. Thus, DE-A-4226854 does not disclose an elongated body, flexible in one configuration, to bend into a position for extension up through flow slots in support plates of the interior of the steam generator, and rigid in another configuration for positioning and supporting cleaning/inspection devices up through the steam generator proximate to the upper two bundles of the steam generator. The present invention as claimed is thereby distinguished from DE-A-4226854.

### SUMMARY OF INVENTION

It is an object of this invention to provide a deployment system for an upper bundle steam generator cleaning/inspection device which does not rely on telescoping cylinders.

It is a further object of this invention to provide such a deployment system which allows cleaning of the steam generator to proceed from the top down thereby flushing deposits downward during the cleaning process.

It is a further object of this invention to provide such a deployment system which eliminates the need to use chemical cleaning techniques and overcomes the disadvantages inherent in chemical cleaning or which can be used in conjunction with chemical cleaning.

It is a further object of this invention to provide such a deployment system which fits through an access in the bottom of the steam generator, which can be protracted to extend up through the flow slots in the support plates of the interior of the steam generator to deliver a cleaning head or inspection camera to the upper bundles of the steam generator, and which then retracts back down through the flow slots for removal after the cleaning and/or inspection operation is completed.

This invention results from the realization that instead of inserting a device into the steam generator through the hand hole and then relying on telescoping cylinders to deploy a cleaning head or inspection camera up through the tube support plates, a suitable deployment system can instead be constructed by using a snake-like device which is fed through the hand hole from the outside of the steam generator, is flexible enough to make the 90° turn to be in position to travel upwards through the tube support plates, and is also rigid enough to then travel upwards to the upper tube bundles of the steam generator (e.g. 9.1 meters (30 feet)) and still support inspection devices or cleaning heads for inspection or cleaning the upper areas of the steam generator, and which is also retractable so that the inspection device or cleaning heads are safely removed from within the steam generator.

This invention features a deployment system for an upper bundle steam generator cleaning/inspection device comprising the features of claim 1.

The elongated body may be a rigid chain, or a pair of rigid chains each bendable in only one direction, each deployed into the steam generator by bending, the pair deployed back to back in the rigid configuration.

Another type of rigid chain includes a number of links, each pivotable with respect to an adjacent link in one configuration, the links including means for releasably locking adjacent links against pivoting in another configuration. The means for releasably locking includes retractable pins for locking the links together when engaged, and for freeing said links when retracted. In this case, the means for driving includes means for automatically retracting and engaging the pins.

The means for releasably locking may alternatively include detent balls on one portion of the links and complementary detent recesses on one portion of adjacent sets of links or, the means for releasably locking may include a spring for urging one link to remain engaged with an adjacent link. The means for releasably locking may be a magnet for urging one link to remain engaged with an adjacent link. Also, the means for releasably locking may be both a spring and a magnet for urging one link to remain engaged with an adjacent link. The rigid chain could also be a plurality of links each having a hinge and a portion extending beyond the hinge for preventing movement of an adjacent link in one direction.

As an alternative to the rigid chain configuration, the elongated body may include a plurality of rigid links. The links each have a hinge and at least one articulation recess proximate the hinge for allowing movement of an adjacent link in only one direction, or there may be an articulation recess on each side of the hinge. The deployment system may also be an extendable mast formed of a material self-biased to form a tube. In this case, the means for driving includes a pair of counter-rotating drums for driving the mast material engaged between the drums.

The mast configuration and the rigid chain configuration or the rigid link configuration may be combined: the elongated body comprises a rigid chain supported by an extendable mast formed of a material self-biased to form a tube or the elongated body comprises a series of rigid links supported by a mast formed of a material self-biased to form a tube.

The drive means preferably includes a turning shoe for directing the elongated body from a position proximate the tube sheet to a position for extension upwards therefrom to the upper bundles of the steam generator.

### DISCLOSURE OF PREFERRED EMBODIMENT

Other advantages will occur to those skilled in the art from the following description of a preferred embodiment and the accompanying drawings, in which:
Fig. 1 is a schematic view of a typical steam generator;
Fig. 2 is a schematic diagram of one type of cleaning head raised into position by the deployment system of this invention;
Fig. 3 is a schematic diagram of a combined cleaning head and inspection device raised nto position by the deployment system of this invention;
Fig. 4 is a schematic diagram of a deployment system according to the prior art which uses a series of telescopic cylinders;
Fig. 5 is a schematic view of the deployment system of this invention which employs a elongated body flexible in one configuration and fairly rigid in another configuration;
Fig. 6 is a schematic view of a rigid chain embodiment of the elongated body shown in Fig. 5;
Fig. 7 is a schematic view an embodiment including back to back rigid chains according to this invention;
Fig. 8 is a front view of a typical chain linkage;
Fig. 9 is a front view of a rigid chain used in the deployment system of this invention;
Fig. 10 is a front view of two rigid chains placed back to back in the deployment system of this invention;
Figs. 11A and 11B are schematic views of another type of rigid chain used in the deployment system of this invention;
Fig. 12 is a schematic view of still another type of rigid chain used in the deployment system of this invention;
Fig. 13 is a schematic view of a spring biased rigid chain according to this invention:
Fig. 14 is a schematic view of a magnetically biased rigid chain according to this invention;
Fig. 15 is a schematic view of a rigid chain incorporating both a magnet and a spring;
Fig. 16 is a front view of another type of rigid chain according to this invention;
Fig. 17 is a schematic view of a series of rigid links with a single articulation recess according to this invention;
Fig. 18 is a schematic view of a series of rigid links having dual articulation recesses according to this invention;
Fig. 19 is a schematic view of a self-biased mast used in the deployment system according to this invention;
Fig. 20 is another view of the self-biased mast of this invention including drive means; and
Fig. 21 is a schematic view of a deployment system according to this invention which employs both a mast material and a rigid link structure.

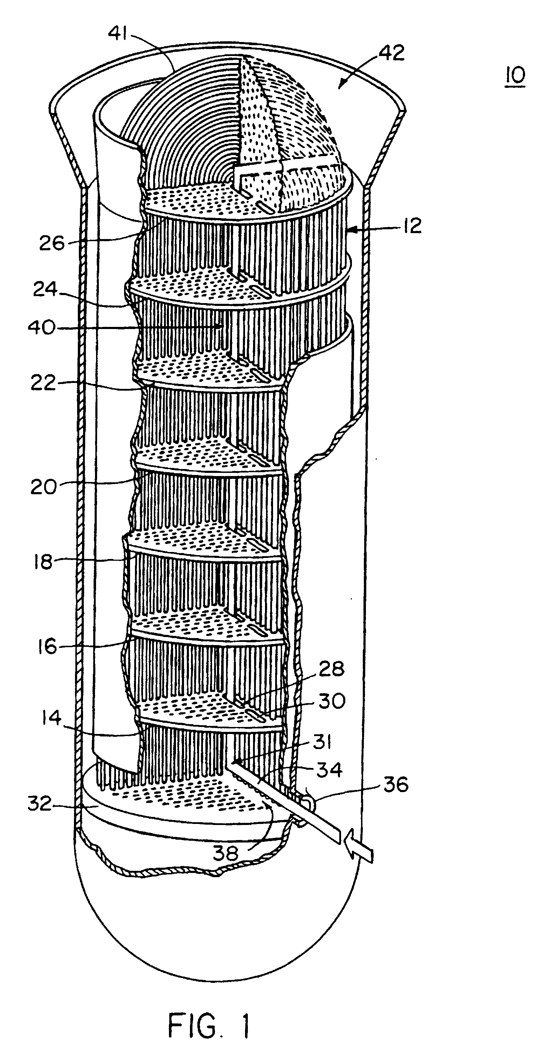

Fig. 1 schematically shows steam generator 10 which includes heat transfer tubes 12 separated into sections by successive tube support plates 12, 14, 16 18, 22, 24, and 26. Each tube support plate includes a number of flow slots 28 and 39 as shown for first tube support plate 12.

The steam generator may utilize 2,9 meters (116") diameter tube support plates spaced evenly at 1.3 meters (51") above the tube sheet. There are two 15.2 centimeters (6") diameter hand holes such as hand hole 36 at each end of the 8.9 centimeters (3 1/2") blowdown lane 38 at the tube sheet 32 level. Each tube sheet support plate has three flow slots measuring 7 by 38.1 centimeters (2 3/4" by 15") spaced at 10.2 centimeters (4" inches) on each side of center tie rod 40. The flow slots are aligned with respect to each other so that there is a clear "line of sight" vertical passage from the blow down lane 38 to the U-bends 41 of the tubes above the top tube support plate 26.

As discussed in the Background of the Invention above, there are known instruments for water-spray cleaning the areas between tube sheet 32 and first tube sheet support plate 14 at the bottom of the steam generator but the very close confines within the upper bundles of the steam generator make cleaning the tubes near the upper support plates very difficult. See, e.g., U.S. Patent No. 5,265,129.

In this invention, it was realized that there is an access path 34 from hand hole 36 along blowdown lane 38 to the center tie rod 40 and then upwards through the aligned flow slots 28, 30, etc. in each support plate to the top portion 42 of the steam generator. And, it was realized that if a cleaning head or heads could be deployed to the top portion 42 of the steam generator, the generator could be cleaned from the top down thereby flushing deposits downward during the cleaning process. The technical challenge is to design a cleaning or inspection head deployment system which will fit within the close confines of the interior of the steam generator, which is flexible enough to make the 90° turn shown at 31, which is rigid enough to then travel upwards to the upper bundles 42 of the steam generator to support inspection devices or cleaning heads for inspection or cleaning, and which is also retractable so that the inspection or cleaning heads are safely removed for which the steam generator.

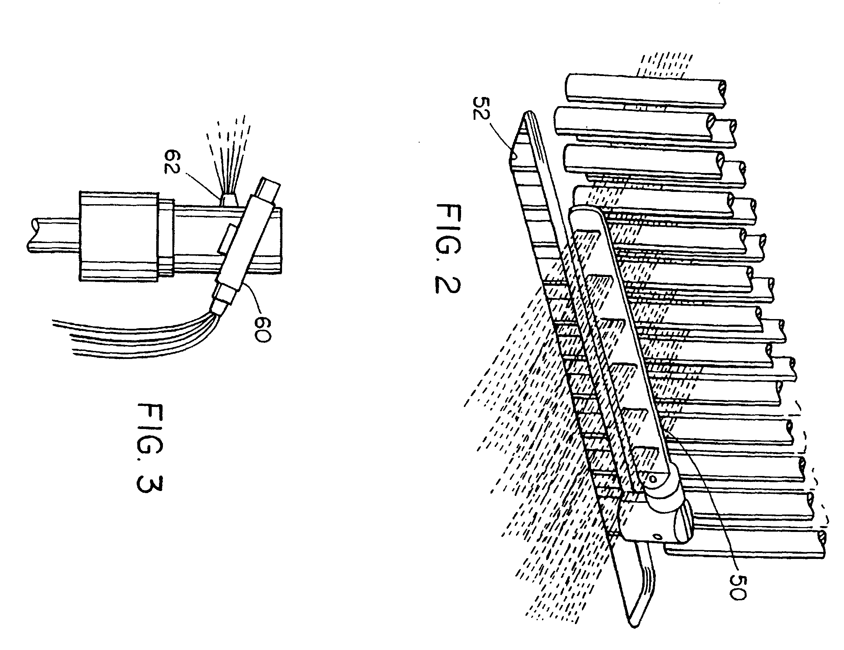

Fig. 2 shows an example of one type of cleaning head 50 designed to spray water from flow slot 52 about a support plate in the upper reaches of the steam generator. Fig. 3 shows a combined inspection/cleaning device including video camera 60 and nozzle 62 which may also be deployed up through the flow slots in the support plates.

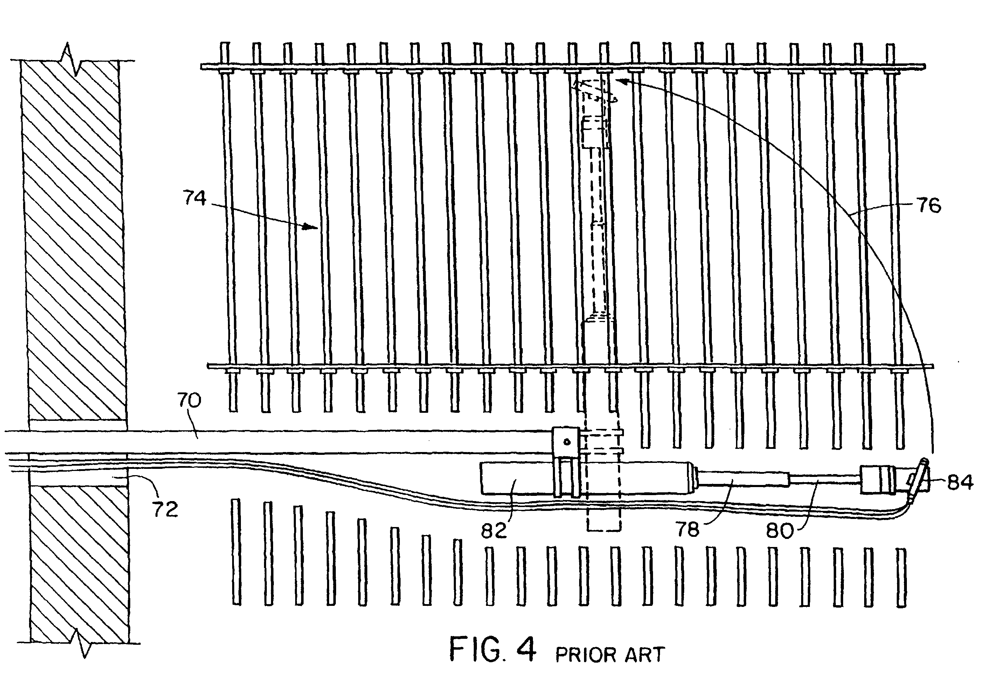

The prior art deployment system for such a combined inspection/cleaning device is shown in Fig. 4. Boom 70 is extended through access port 72 and then uprighted within blowdown lane 74 as shown by arrow 76. Telescoping members 78, 80 extend from within cylinder 82 and deploy inspection camera 84 upward. See U.S. Patent No. 5.265,129.

As explained in the Background of Invention above, however, the distance between tube sheet 32, Fig. 1 and the first support plate 12 can be only .46 meters (18 inches). A device such as the boom and telescoping cylinders combination which in its collapsed state is only .46 meters (18 inches) tall and which must still extend up to 9.1 meters (30 feet) is difficult to design, manufacture, and control. Moreover, this design requires that the boom 70 be placed inside the steam generator.

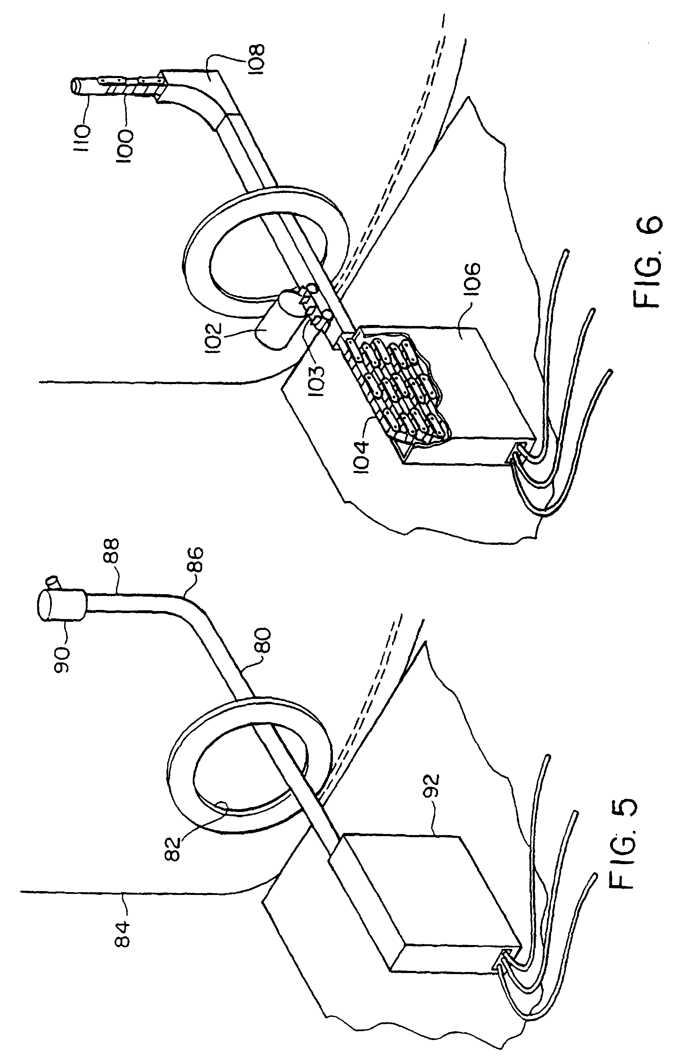

In contrast, the invention of this application includes an elongated body 80. Fig. 5 feedable through hand hole 82 from outside steam generator 84. Elongated body 80 is flexible enough to bend into position to travel upwards as shown at 86 and also rigid in another configuration as shown at 88 for positioning cleaning head/inspection device 90 (see Figs. 2 and 3) up through the steam generator to reach the upper tube bundles.

There are some means 92 for driving elongated body 80 up through support plates 12, 14, 16, 18, 22, 24, and 26, Fig. 1, and for retracting body 80, Fig. 5, back down through the support plates.

In a preferred embodiment, elongated body 80, Fig. 5, is a "rigid chain" 100, Fig. 6 driven by motor 102 and drive assembly 103 as it unfurls from stack 104 in container 106. Turn shoe 108 directs rigid chain 100 to,turn upwards carrying inspection/cleaning head 110 to the upper two bundles of the steam generator. Rigid chain 100 is flexible enough to make the bend shown at 109 but is also rigid enough to extend upwards after bend 108 and support cleaning and inspection equipment about the upper tube bundles some 30 feet from bend 108.

Other elongated bodies, however, are possible and are within the scope of this invention so long as they are flexible in one configuration to bend into a position for extension up through the flow slots and rigid in another configuration for positioning and supporting cleaning head/inspection devices up through the flow slots in the support plates of the steam generator. The various embodiments are discussed as follows.

### Rigid Chains

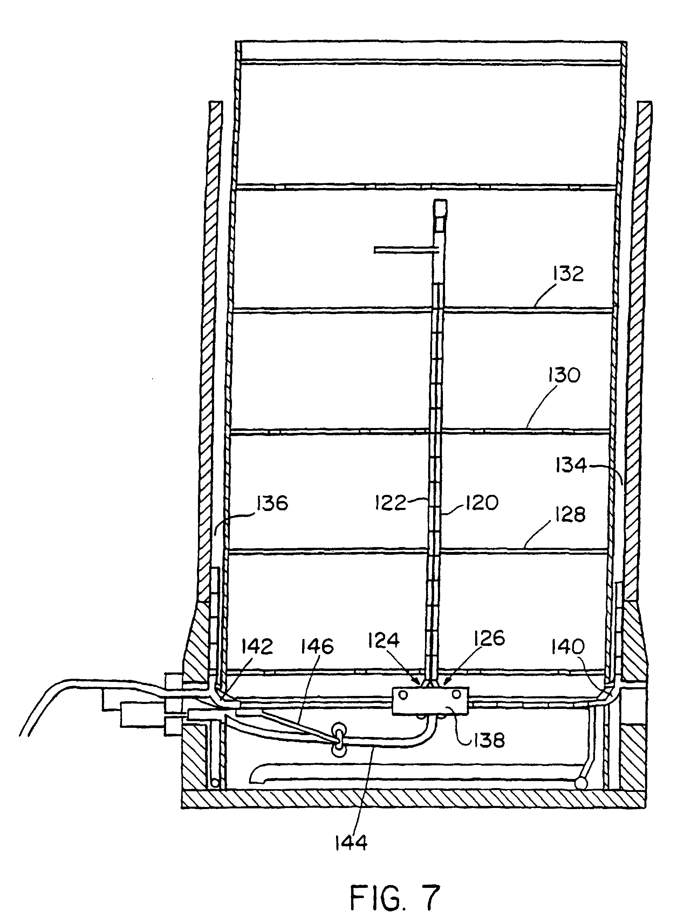

In one embodiment, there are two rigid chains 120 and 122, Fig. 7. Rigid chain 122 is constructed to bend in only one direction as shown in 124 while rigid chain 120 is constructed to bend only in the opposite direction as shown at 126. When placed back-to-back, the combination is rigid enough to be deployed upward supporting a cleaning head/inspection device up through the flow slots in the tube support plates 128, 130, 132, etc. Rigid chain 120 is deployed first in annulus 134 while rigid chain 122 is deployed first in annulus 136. Then, both chains are driven by drive 138 through guide shoes 140 and 142 respectively. Video/cleaning fluid umbilical 144 is tensioned by tension arm 146.

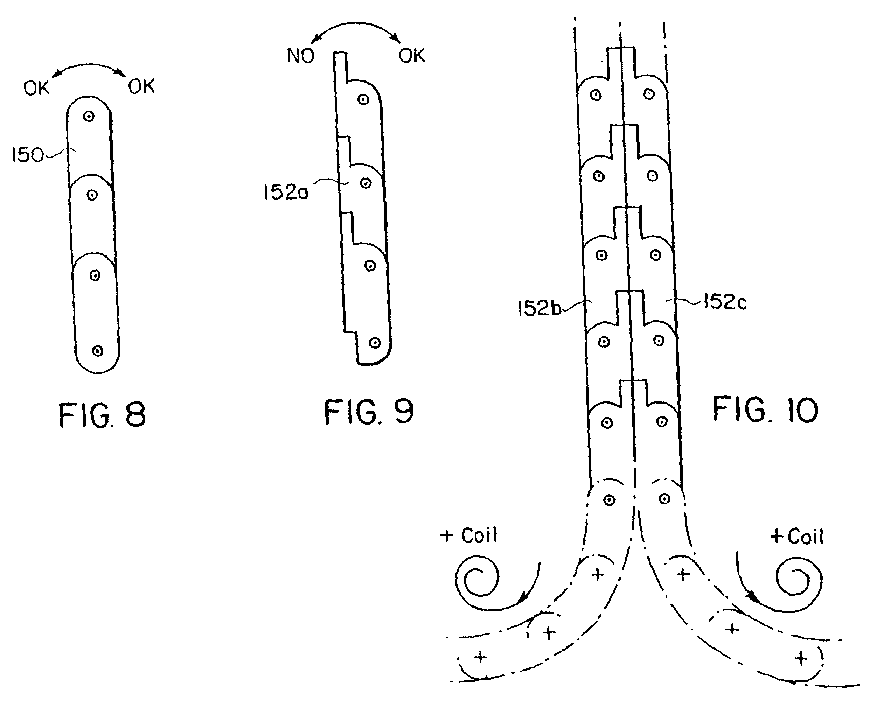

As shown in Fig. 8, a typical non-rigid chain 150 is free to bend in two directions. Rigid chain 152a, Fig. 9, however, is free to bend in only one direction. When two such chains 152b and 152c, Fig. 10, are placed back to back, a rigid structure is formed from an assembly flexible in one configuration - namely, each chain by itself.

Another rigid chain is shown in Fig. 11A. Each link 160 is hollow to carry video 162, cleaning spray 164, and power 166 umbilicals. Pin 168 engages the adjacent link to prevent rotation of the links with respect to each other. Pin 168 also retracts to allow bending of link 172 with respect to link 160.

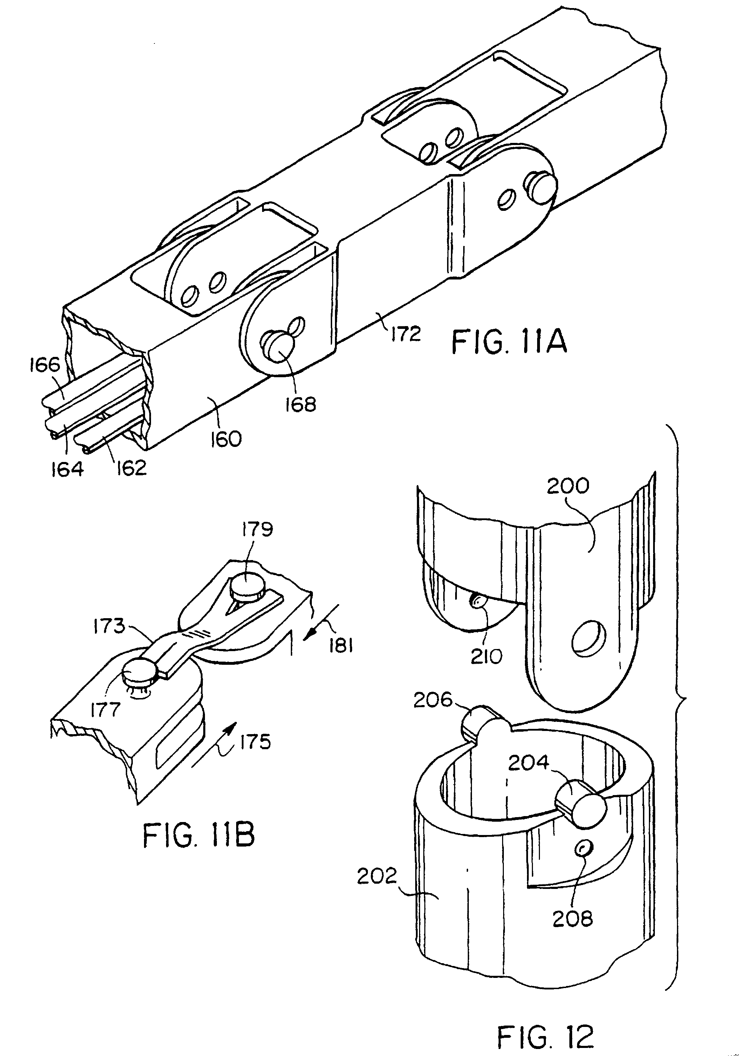

In this embodiment, a pin drive 173, Fig. 11B is used to push the engagement pins in after the 90° turn is made providing a rigid support. The pin drive also pulls the engagement pins out upon retraction of the rigid chain back down through the flow slots of the support plates of the steam generator. Pin drive 177 can be as simple as a set of leaf type springs that bear against the top of the pin 177, engaging it in the hole, when pushed from the direction shown by arrow 175. When pin 179 is pulled back, in the direction shown by arrow 181, the leaf springs bear under the pin head, disengaging it from the hole in the links.

In another embodiment, the rigid chain concept includes link 200, Fig. 12, joined to link 202 by pins 204 and 206. Detent ball 208 on link 202 engages a detent recess 210 on link 200. In this way, link 202 is normally locked with respect to link 200 but upon the application of a sufficient bending force (by pushing the chain through turn shoe 108, Fig. 6) detent ball 208 will be dislodged from detent recess 210 thereby allowing link 200 to pivot with respect to link 202 providing a flexible configuration to bend into a position for extension up through the flow slots in the support plates of the interior of the steam generator. After the bend is made, the detent balls of one link again engage the detent recesses of an adjacent link to provide a rigid configuration for positioning and supporting inspection/cleaning devices up through the steam generator proximate the upper tube bundles.

The design shown in Fig. 12 offers advantages over the paired rigid chain design shown in Fig. 7 in that only one set of links is required and also offers advantages over the pin configuration shown in Fig. 11 since a pin engagement/retraction drive is not required. Also, in the configuration shown in Fig. 12, the hollow interior of links 200 and 202 provide a passage for the umbilical subsystem.

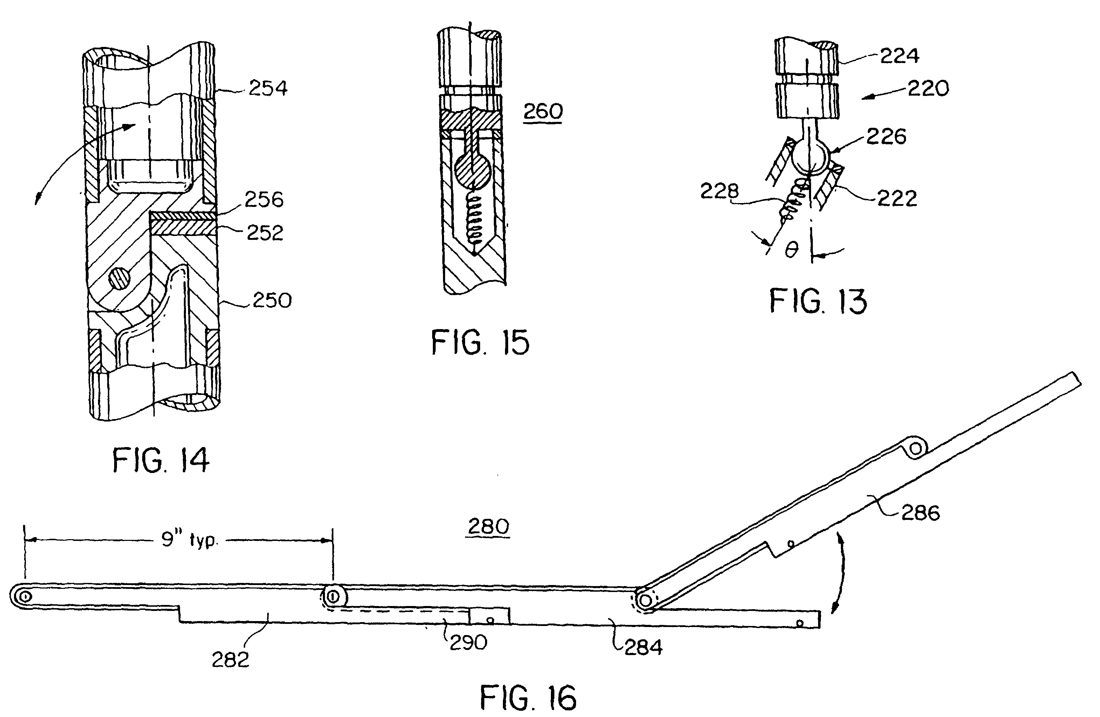

In another embodiment, rigid chain 220, Fig. 13 includes links 222 and 224 joined by ball and spring assembly 226. Spring 228 biases link 224 to lock with respect to link 222 but upon the application of sufficient bending force (by pushing the chain through turn shoe 108, Fig. 6), the links can rotate with respect to each other to make the 90° turn shown at 86. Fig. 5. The closest analogy to this embodiment is a series of tent poles engaged by an elastic "bungie" cord running though the center of the poles. After the 90° turn is made, the springs bias the links together providing a rigid configuration for deployment up through the steam generator.

In another embodiment, link 250, Fig. 14 includes rare earth magnet 252 while link 254 includes ferrous plate 256. The magnet 252 of link 250 is attracted to ferrous plate 256 of link 254 thereby urging the links to remain locked together. A sufficient bending force, however, as with the designs shown in Figs. 12 and 13, will allow the links to rotate with respect to each other but will then engage again after bending of the chain. Rigid chain 260, Fig. 15, is a combination of both the spring embodiment shown in Fig. 13 and the magnet embodiment shown in Fig. 14.

In another embodiment, rigid chain 280, Fig. 16, includes fairly lengthy links 282, 284, and 286 each having an extension 290 as shown for link 282 which prevents each adjacent link from rotating in one direction. These longer links minimize the total number of links required for the system.

### Rigid Links

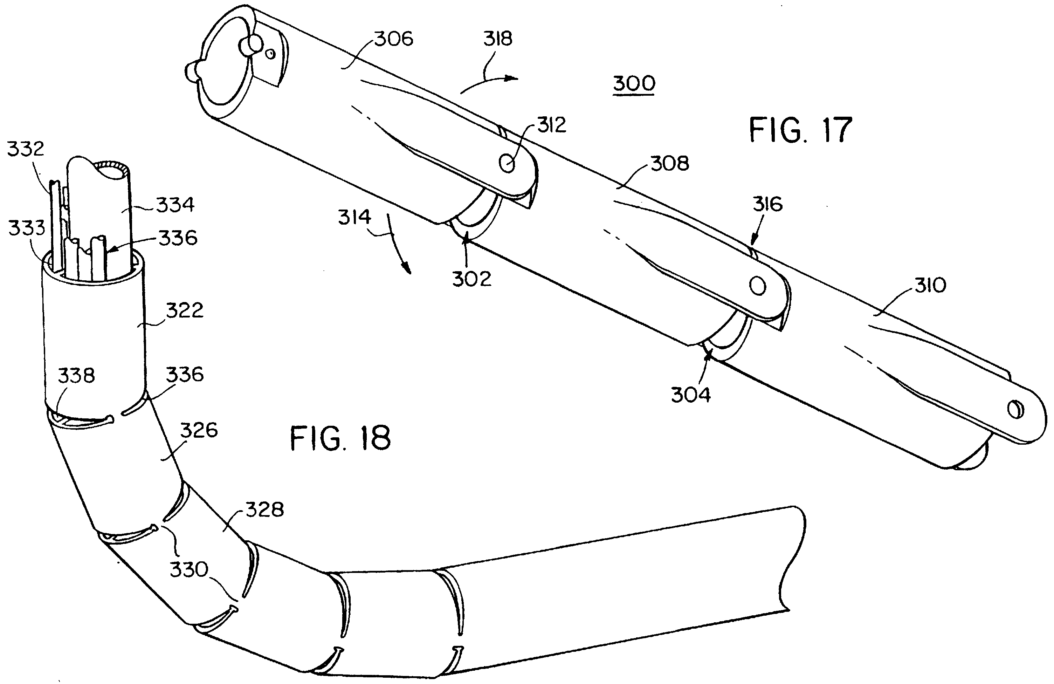

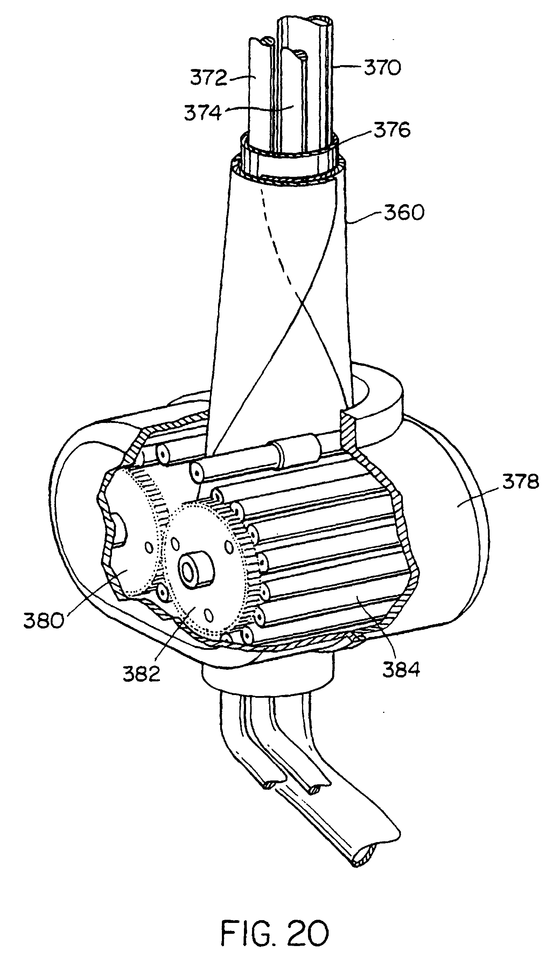

Another embodiment for elongated body 80, Fig. 5 which is flexible in one configuration and rigid in another configuration is a series of rigid links, Fig. 17. Hollow rigid links 306, 308, 310 each include articulation recesses 302 and 304 between adjacent links 306, 308, and 310. In this embodiment, the articulation recess is only on one side of each link. Pivot pin 312 and articulation recess 302 allow link 306 to rotate slightly with respect to link 308 in the direction shown by arrow 314. Since each link can rotate slightly, the series of rigid links can make the bend required to traverse the blowdown lane of the steam generator (See Fig. 1) but then also extend upward through the flow slots and in this configuration the assembly is fairly rigid since "backbone" portion 316 prevents the individual links from bending in the direction shown by arrow 318.

A similar design is shown in Fig. 18 for rigid links 322, 326 and 328. In this case, each link 322, 324, and 326 comprises a hollow member joined to an adjacent link by elastomeric hinge element 330. Here, there is an articulation recess 336 and 338 on each side of each elastomeric hinge element. The series of links can bend enough to be driven down the blowdown lane and then turn upwards to extend up through the flow slots. Straightening cable 332 which passes through orifice 333 formed in each link is used to lock the links in a rigid configuration. Water umbilical 334 and peripheral service lines 336 pass through the center of each link. These links may be made of any flexible plastic material.

### Mast Embodiments

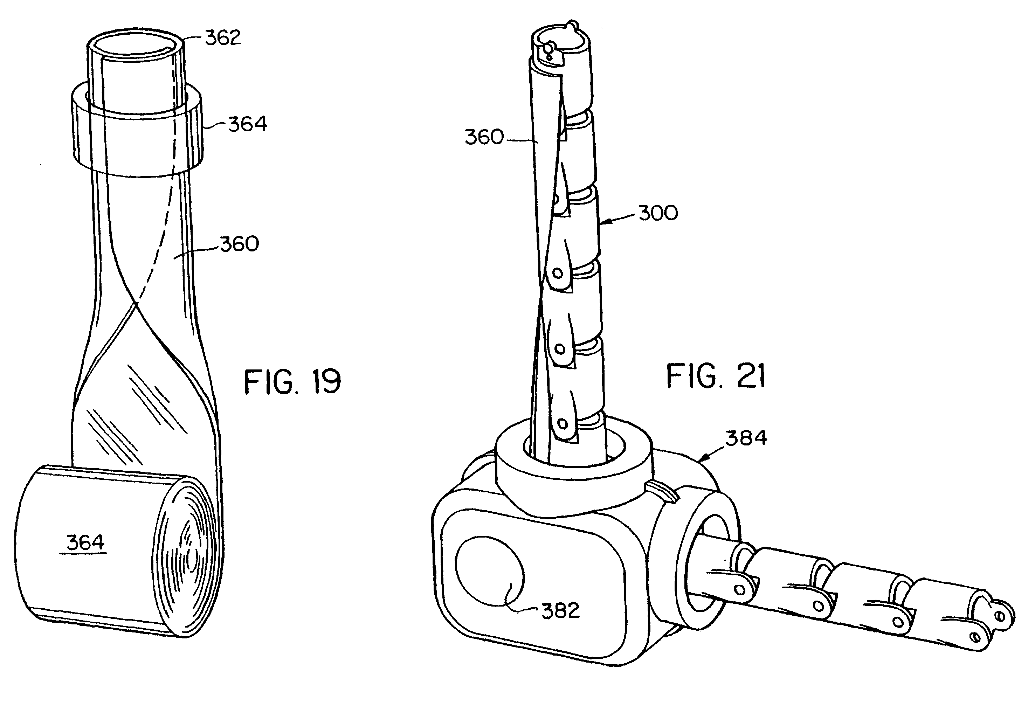

An alternative to the various rigid chain or rigid link embodiments described above is shown in Fig. 19. Extendable mast 360 is made of a material normally self-biased to form a tube as shown at 362 even though it can be fed off a flat roll 364. The material of mast 360 is typically a .010 spring-tempered stainless steel. The natural aspect of the material is a 5.1 centimeters (2") diameter tube with plenty of overlap. The tube may be reinforced along its length by guide sleeves such as sleeve 364 as required.

As shown in Fig. 20, mast 360 guides water line 370 and peripheral service lines 372 and 374 encased by jacketing material 376 up through the flow slots of the steam generator. Motor drive 378 drives this embodiment of the deployment system up through the flow slots. Motor drive 378 includes counter rotating drums 380 and 382 each driving planetary guide roller arrangement 384. As an alternative, two rolls of the mast material may be used to form a tube-- each roll forming half of the tube with plenty of overlap for extra rigidity.

### Combined Mast/Rigid Link Embodiments

The mast shown in Figs. 19-20 may used in conjunction with any of the rigid chains or rigid links described above including the rigid link embodiment 300, Fig. 17 as shown in Fig. 21 for additional support as the rigid links are extended upward to the top of the steam generator. Mast storage drum 382, Fig. 21 includes the roll or rolls of mast material and turning shoe 384 feeds the rigid links from outside the hand hole of the steam generator and ultimately up through the flow slots in the successive series of support plates.

In any embodiment of the elongated snake-like body of this invention, whether rigid chain or rigid link embodiments or the mast material embodiment, or combinations thereof, the boom and telescopic cylinders of the prior art shown in Fig. 4 are eliminated and instead the elongated body is small enough so that it can be fed through the hand hole of the steam generator and through the flow slots in successive support plates. The body is also fully retractable to prevent any risk of any component of the system from becoming lodged in the upper regions of the steam generator. The body is flexible enough in one configuration to bend into a position for extension up through the flow slots in successive support plates and rigid in another configuration for positioning and support cleaning head/inspection devices up about the upper tube bundles.

Accordingly, the instant invention in any embodiment achieves the seemingly mutually exclusive goal of providing a deployment device which can bend and which is also rigid enough after the bend to support a cleaning head or an inspection device at a distance up to 9.1 meters (30 feet) within the steam generator.

## Claims

1. A deployment system for an upper bundle steam generator cleaning/inspection device (90), said deployment system comprising:
an elongated body (80) feedable more or less horizontally through a lower access in a steam generator shell proximate the tube sheet (32) of the steam generator (10), said elongated body (80) being: a) flexible in one configuration to bend into a position for extension vertically up through the flow slots (28, 30) in the support plates (14, 16, 18, 22, 24, 26) of the interior of the steam generator (10), and b) rigid when vertically disposed for positioning and supporting the cleaning/inspection device (90) up through the steam generator (10) proximate the upper tube bundles (42) of the steam generator (10); and
means for guiding (108) the elongated body to bend from the horizontal orientation to the vertical rigid orientation; and/or
means for driving (102, 103) said elongated body (80) vertically up through said support plutes (14, 16, 18, 22, 24, 26) and also for retracting said elongated body (80) back down through said support plates (14, 16, 18, 22, 24, 26).

2. The deployment system of claim 1 in which said elongated body (80) assembly includes means for mounting a cleaning head (50) on a terminal end thereof for cleaning the upper tube bundles (42) of the steam generator (10).

3. The deployment system of claim 1 in which said elongated body (80) includes means for mounting an inspection camera (60) on a terminal end thereof for inspecting the upper tube bundles (42) of the steam generator.

4. The deployment system of claim 1 which said elongated body (80) is a rigid chain (100).

5. The deployment system of claim 1 in which said elongated body (80) comprises a pair of rigid chains (120, 122) each bendable in only one direction, each deployed into the steam generator (10) by bending, the pair (120, 122) deployed back to back in the rigid configuration.

6. The deployment system of claim 1 which said elongated body (80) comprises a pair of rigid chains (120, 122), each chain free to bend in one direction but rigid in the opposite direction.

7. The deployment system of claim 6 further including means for orientating said pair of rigid chains (120, 122) back to back thereby providing a rigid structure for positioning and supporting cleaning/inspection devices up through the steam generator (10).

8. The deployment system of claim 4 in which said rigid chain (100) includes a number of links (160), each pivotable with respect to an adjacent link (160) in one configuration, said links (160) including means for releasably locking adjacent links (160) against pivoting in another configuration.

9. The deployment system of claim 8 in which said means for releasably locking includes retractable pins (168) for locking said links (160) together when engaged, and for freeing said links (160) when retracted.

10. The deployment system of claim 9 in which said means for driving includes means for automatically retracting and engaging said pins (168).

11. The deployment system of claim 8 in which said means for releasably locking includes detent balls (208) on one portion of said links (160) and complementary detent recesses (210) on one portion of adjacent sets of links (160).

12. The deployment system of claim 8 which said means for releasably locking includes a spring (228) for urging one link (160) to remain engaged with an adjacent link (160).

13. The deployment system of claim 8 in which said means for releasably locking includes a magnet (252) for urging one link (160) to remain engaged with an adjacent link (160).

14. The deployment system of claim 8 in which said means for releasably locking includes both a spring (228) and a magnet (252) for urging one link (160) to remain engaged with an adjacent link (160).

15. The deployment system of claim 4 in which said rigid chain (100) includes a plurality of links (160) each having a hinge and a portion extending beyond said hinge (290) for preventing movement of an adjacent link on one direction.

16. The deployment system of claim 1 in which said elongated body (80) includes a plurality of rigid links (160).

17. The deployment system of claim 16 in which said links (160) each have a hinge and at least one articulation recess (302, 304) proximate said hinge for allowing movement of an adjacent link (160) in only one direction.

18. The deployment system of claim 17 in which said links (160) includes an articulation recess (336, 338) on each side of said hinge (330).

19. The deployment system of claim 1 in which said elongated body (80) includes an extendable mast (360) formed of a material self-biased to form a tube (362).

20. The deployment system of claim 19 in which said means for driving includes a pair of counter-rotating drums (380, 382) for driving said mast material engaged between said drums (380, 382).

21. The deployment system of claim 1 in which said elongated body (80) comprises a rigid chain (100) supported by an extendible mast (360) formed of a material self-biased to form a tube (362).

22. The deployment system of claim 1 in which said elongated body (80) comprises a series of rigid links (160) supported by a mast (360) formed a material self-biased to form a tube (362).

23. The deployment system of claim 1 in which said drive means includes a turning shoe (384) for directing said elongated body (80) from a position proximate the tube sheet to a position for extension upwards therefrom to the upper bundles (42) of the steam generator (10).

24. The deployment system of claim 1 and including a head (50) attached to the distal end of the elongated body (80), which head extends more or less horizontally from the elongated body (80) when the elongated body (80) is extended vertically and the distal end thereof is proximate the upper bundles (42) of the steam generator (10).

## Patentansprüche

1. Entfaltungssystem für eine Reinigungs-/Inspektionseinrichtung (90) eines Dampfgenerators mit obenliegendem Bündel, wobei das Entfaltungssystem
einen mehr oder weniger horizontal durch einen unteren Einlaß in einen Dampfgeneratormantel nahe dem Rohrboden (32) des Dampfgenerators (10) einführbaren langgestreckten Körper (80), der (a) in einer Konfiguration flexibel ist, um sich in einer Position für vertikale Erstreckung nach oben durch die Strömungsschlitze (28, 30) in den Tragplatten (14, 16, 18, 22, 24, 26) des Inneren des Dampfgenerators (10) zu biegen, und (b) in vertikaler Anordnung starr ist zum Positionieren und Tragen der Reinigungs-/Inspektionseinrichtung (90) nach oben durch den Dampfgenerator (10) nahe dem oberen Rohrbündel (42) des Dampfgenerators (10) und
Mittel zum Führen (108) des langgestreckten Körpers zwecks Biegung aus der horizontalen Lage in die starre vertikale Lage und/oder
Mittel zum Antrieb (102, 103) des langgestreckten Körpers (80) vertikal nach oben durch die Tragplatten (14, 16, 18, 22, 24, 26) wie auch zum Zurückziehen des langgestreckten Körpers (80) zurück nach unten durch die Tragplatten (14, 16, 18, 22, 24, 26) aufweist.

2. Entfaltungssystem nach Anspruch 1, worin die langgestreckte Körperanordnung (80) Mittel zum Anbringen eines Reinigungskopfes (50) an einem Außenende desselben zum Reinigen des oberen Rohrbündels (42) des Dampfgenerators (10) aufweist.

3. Entfaltungssystem nach Anspruch 1, worin der langgestreckte Körper (80) Mittel zum Anbringen einer Inspektionskamera (60) an einem Außenende desselben zum Inspizieren des oberen Rohrbündels (42) des Dampfgenerators aufweist.

4. Entfaltungssystem nach Anspruch 1, worin der langgestreckte Körper (80) eine starre Kette (100) ist.

5. Entfaltungssystem nach Anspruch 1, worin der langgestreckte Körper (80) ein Paar starrer Ketten (120, 122) aufweist, die beide in nur einer Richtung flexibel sind und jeweils dadurch in den Dampfgenerator (10) ausfahrbar sind, daß sie in der starren Konfiguration beide (120, 122) Rücken an Rücken gebogen werden.

6. Entfaltungssystem nach Anspruch 1, worin der langgestreckte Körper (80) ein Paar starrer Ketten (120, 122) aufweist, deren jede frei ist, in eine Richtung gebogen zu werden, jedoch starr in der entgegengesetzten Richtung.

7. Entfaltungssystem nach Anspruch 6, des weiteren mit Mitteln zur Orientierung des Paares starrer Ketten (120, 122) Rücken an Rücken, um so eine starre Struktur zum Positionieren und Tragen von Reinigungs-/Inspektionseinrichtungen nach oben durch den Dampfgenerator (10) zu bilden.

8. Entfaltungssystem nach Anspruch 4, worin die starre Kette (100) eine Anzahl Glieder (160) aufweist, deren jedes in einer Konfiguration gegenüber einem anschließenden Glied (160) schwenkbar ist, wobei die Glieder (160) Mittel zum lösbaren Sperren anschließender Glieder (160) gegen Schwenken in einer anderen Konfiguration aufweisen.

9. Entfaltungssystem nach Anspruch 8, worin die Mittel zum lösbaren Sperren zurückziehbare Stifte (168) zum Zusammensperren der Glieder (160) im Eingriff und zum Freigeben der Glieder (160) im zurückgezogenen Zustand aufweisen.

10. Entfaltungssystem nach Anspruch 9, worin die Mittel zum Antrieb Mittel zum automatischen Zurückziehen und In-Eingriff-Bringen der Stifte (168) aufweisen.

11. Entfaltungssystem nach Anspruch 8, worin die Mittel zum lösbaren Sperren Rastkugeln (208) an einem Abschnitt der Glieder (160) und dazu passende Rastausnehmungen (210) in einem Abschnitt anschließender Sätze von Gliedern (160) aufweisen.

12. Entfaltungssystem nach Anspruch 8, worin die Mittel zum lösbaren Sperren eine Feder (228) zum Drängen eines Gliedes (160) zum In-Eingriff-Bleiben mit einem benachbarten Glied (160) aufweisen.

13. Entfaltungssystem nach Anspruch 8, worin die Mittel zum lösbaren Sperren einen Magneten (252) zum Drängen eines Gliedes (160) zum In-Eingriff-Bleiben mit einem benachbarten Glied (160) aufweisen.

14. Entfaltungssystem nach Anspruch 8, worin die Mittel zum lösbaren Sperren sowohl eine Feder (228) als auch einen Magneten (252) zum Drängen eines Gliedes (160) zum In-Eingriff-Bleiben mit einem benachbarten Glied (160) aufweisen.

15. Entfaltungssystem nach Anspruch 4, worin die starre Kette (100) eine Mehrzahl Glieder (160), ein jedes mit einem Gelenk und einem sich über das Gelenk (290) hinaus erstreckenden Abschnitt zur Verhinderung einer Bewegung eines benachbarten Gliedes in einer Richtung aufweisen.

16. Entfaltungssystem nach Anspruch 1, worin der langgestreckte Körper (80) eine Mehrzahl starrer Glieder (160) aufweist.

17. Entfaltungssystem nach Anspruch 16, worin die Glieder (160) jeweils ein Gelenk und mindestens eine Gelenkausnehmung (302, 304) nahe dem Gelenk zwecks Zulassung einer Bewegung eines benachbarten Gliedes (160) in einer einzigen Richtung aufweisen.

18. Entfaltungssystem nach Anspruch 17, worin die Glieder (160) eine Gelenkausnehmung (336, 338) zu beiden Seiten des Gelenks (330) aufweisen.

19. Entfaltungssystem nach Anspruch 1, worin der langgestreckte Körper (80) einen ausfahrbaren Mast (360) aus einem vorgespannten Material zur Bildung eines Rohres (362) aufweist.

20. Entfaltungssystem nach Anspruch 19, worin die Mittel zum Antrieb ein Paar sich gegensinnig drehender Trommeln (380, 382) zum Treiben des zwischen den Trommeln (380, 382) eingespannten Mastmaterials aufweisen.

21. Entfaltungssystem nach Anspruch 1, worin der langgestreckte Körper (80) eine starre Kette (100) aufweist, die von einem ausfahrbaren Mast (360) aus einem vorgespannten Material zur Bildung eines Rohres (362) getragen wird.

22. Entfaltungssystem nach Anspruch 1, worin der langgestreckte Körper (80) eine Serie starrer Glieder (160) aufweist, die von einem aus einem vorgespannten Material zur Bildung eines Rohres (362) gebildeten Mast (360) getragen werden.

23. Entfaltungssystem nach Anspruch 1, worin die Mittel zum Antrieb einen sich drehenden Schuh (384) zum Dirigieren des langgestreckten Körpers (80) aus einer Position nahe dem Rohrboden in eine Position zum sich von dort nach oben zu dem oberen Bündel (42) des Dampfgenerators (10) Erstrecken aufweisen.

24. Entfaltungssystem nach Anspruch 1 und mit einem an dem auswärtigen Ende des langgestreckten Körpers (80) angebrachten Kopf (50), der sich von dem langgestreckten Körper (80), wenn dieser vertikal ausgefahren ist und sein auswärtiges Ende sich nahe dem oberen Bündel (42) des Dampfgenerators (10) befindet, mehr oder weniger horizontal erstreckt.

## Revendications

1. Système de déploiement pour un dispositif (90) de nettoyage/inspection du faisceau supérieur d'un générateur de vapeur, ledit système de déploiement comprenant:
un corps allongé (80) qui peut être avancé plus ou moins à l'horizontale par un accès inférieur ménagé dans une enveloppe de générateur de vapeur à proximité de la tôle porte-tubes (32) du générateur de vapeur (10), ledit corps allongé (80) présentant a) une configuration flexible de manière à se courber dans une position qui permet son extension verticale dans les fentes d'écoulement (28, 30) des plaques de support (14, 16, 18, 22, 24, 26) de l'intérieur du générateur de vapeur (10) et b) une configuration rigide lorsqu'il est disposé verticalement pour positionner et soutenir le dispositif (90) de nettoyage/inspection vers le haut du générateur de vapeur (10) à proximité des faisceaux supérieurs de tubes (42) du générateur de vapeur (10); et
un moyen (108) pour guider le corps allongé de façon à ce qu'il se plie depuis l'orientation horizontale jusque dans l'orientation verticale rigide; et/ou
un moyen (102, 103) pour entraîner ledit corps allongé (80) verticalement à travers lesdites plaques de support (14, 16, 18, 22, 24, 26) et également pour rétracter vers le bas le corps allongé (80) à travers lesdites plaques de support (14, 16, 18, 22, 24, 26).

2. Système de déploiement selon la revendication 1, dans lequel ledit ensemble de corps allongé (80) comprend un moyen pour monter une tête de nettoyage (50) sur son extrémité terminale pour nettoyer les faisceaux supérieurs de tubes (42) du générateur de vapeur (10).

3. Système de déploiement selon la revendication 1, dans lequel ledit corps allongé (80) comprend un moyen pour monter une caméra d'inspection (60) sur son extrémité terminale pour inspecter les faisceaux supérieurs de tubes (42) du générateur de vapeur.

4. Système de déploiement selon la revendication 1, dans lequel ledit corps allongé (80) est une chaîne rigide (100).

5. Système de déploiement selon la revendication 1, dans lequel ledit corps allongé (80) comprend une paire de chaînes rigides (120, 122) qui peuvent chacune être pliée dans une seule direction, et qui sont chacune déployée dans le générateur de vapeur (10) par pliage, les chaînes (120, 122) de la paire étant déployées dos à dos dans la configuration rigide.

6. Système de déploiement selon la revendication 1, dans lequel ledit corps allongé (80) comprend une paire de chaînes rigides (120, 122), chaque chaîne étant libre de se plier dans une direction mais étant rigide dans la direction opposée.

7. Système de déploiement selon la revendication 6, comprenant en outre un moyen pour orienter dos à dos les chaînes rigides (120, 122) de ladite paire pour ainsi offrir une structure rigide pour le positionnement et le support de dispositifs de nettoyage/inspection dans le haut du générateur de vapeur(10).

8. Système de déploiement selon la revendication 4, dans lequel ladite chaîne rigide (100) comprend un certain nombre de maillons (160) qui, dans une configuration, peuvent chacun pivoter par rapport à un maillon adjacent (160), lesdits maillons (160) comprenant dans une autre configuration des moyens pour verrouiller de manière libérable des maillons adjacents (160) pour les empêcher de pivoter.

9. Système de déploiement selon la revendication 8, dans lequel ledit moyen de verrouillage libérable comprend des goujons rétractables (168) pour verrouiller lesdits maillons (160) ensemble lorsqu'ils sont engagés et pour libérer lesdits maillons (160) lorsqu'ils sont rétractés.

10. Système de déploiement selon la revendication 9, dans lequel ledit moyen d'entraînement comprend un moyen pour rétracter et engager automatiquement lesdits goujons (168).

11. Système de déploiement selon la revendication 8, dans lequel ledit moyen de verrouillage libérable comprend des billes à détente (208) sur une partie desdits maillons (160) et des creux complémentaires à détente (210) sur une partie d'ensembles adjacents de maillons (160).

12. Système de déploiement selon la revendication 8, dans lequel ledit moyen de verrouillage libérable comprend un ressort (228) destiné à repousser un maillon (160) de telle sorte qu'il reste engagé sur un maillon (160) adjacent.

13. Système de déploiement selon la revendication 8, dans lequel ledit moyen de verrouillage libérable comprend un aimant (252) pour repousser un maillon (160) de telle sorte qu'il reste engagé sur un maillon (160) adjacent.

14. Système de déploiement selon la revendication 8, dans lequel ledit moyen de verrouillage libérable comprend à la fois un ressort (228) et un aimant (252) pour repousser un maillon (160) de telle sorte qu'il reste engagé sur un maillon (160) adjacent.

15. Système de déploiement selon la revendication 4, dans lequel ladite chaîne rigide (100) comprend une pluralité de maillons (160) qui présentent chacun une charnière et une partie qui s'étend au-delà de ladite charnière (290), pour empêcher le déplacement d'un maillon adjacent dans une direction.

16. Système de déploiement selon la revendication 1, dans lequel ledit corps allongé (80) comprend une pluralité de maillons (160) rigides.

17. Système de déploiement selon la revendication 16, dans lequel lesdits maillons (160) présentent chacun une charnière et au moins un creux d'articulation (302, 304) à proximité de ladite charnière, pour permettre le déplacement d'un maillon (160) adjacent dans une seule direction.

18. Système de déploiement selon la revendication 17, dans lequel lesdits maillons (160) comprennent un creux d'articulation (336, 338) sur chaque côté de ladite charnière (330).

19. Système de déploiement selon la revendication 1, dans lequel ledit corps allongé (80) comprend un mât extensible (360) formé d'un matériau auto-sollicité de manière à former un tube (362).

20. Système de déploiement selon la revendication 19, dans lequel ledit moyen d'entraînement comprend une paire de tambours (380, 382) tournant en sens inverse pour entraîner ledit matériau de mât engagé entre lesdits tambours (380, 382).

21. Système de déploiement selon la revendication 1, dans lequel ledit corps allongé (80) comprend une chaîne rigide (100) soutenue par un mât extensible (360) formé d'un matériau auto-sollicité pour former un tube (362).

22. Système de déploiement selon la revendication 1, dans lequel ledit corps allongé (80) comprend une série de maillons rigides (160) soutenu par un mât (360) formé d'un matériau auto-sollicité de manière à former un tube (362).

23. Système de déploiement selon la revendication 1, dans lequel ledit moyen d'entraînement comprend un sabot de rotation (384) pour diriger ledit corps allongé (80) depuis une position proche de la tôle porte-tubes jusque dans une position qui lui permet de s'étendre vers le haut depuis celle-ci, vers les faisceaux supérieurs (42) du générateur de vapeur (10).

24. Système de déploiement selon la revendication 1, et comprenant une tête (50) fixée à l'extrémité distale du corps allongé (80), laquelle tête s'étend plus ou moins à l'horizontale partant du corps allongé (80) lorsque le corps allongé (80) est étendu verticalement et que son extrémité distale est à proximité du faisceau supérieur (42) du générateur de vapeur (10).
